**Europäisches Patentamt**

**European Patent Office**

**Office européen des brevets**

(11) Veröffentlichungsnummer: **0 105 208**
**A1**

## (12) EUROPÄISCHE PATENTANMELDUNG

(21) Anmeldenummer: **83108665.7**

(22) Anmeldetag: **02.09.83**

(51) Int. Cl.³: **A 01 N 63/02,** A 01 N 47/28,
A 01 N 43/90, A 01 N 43/50,
A 01 N 37/44, A 01 N 37/36,
A 01 N 37/02, A 01 M 29/00

(30) Priorität: **04.09.82 DE 3232954**
**24.03.83 DE 3310621**

(43) Veröffentlichungstag der Anmeldung: **11.04.84**
**Patentblatt 84/15**

(84) Benannte Vertragsstaaten: **BE CH DE FR GB IT LI**

(71) Anmelder: **Egerer, Josef, Beim Biengarten 2b,**
**D-8540 Schwabach (DE)**

(72) Erfinder: **Egerer, Josef, Beim Biengarten 2b,**
**D-8540 Schwabach (DE)**

(74) Vertreter: **Rau, Manfred, Dr. Dipl.-Ing. et al,**
**Patentanwälte Rau & Schneck Postfach 91 04 80 Lange**
**Zeile 30, D-8500 Nürnberg 91 (DE)**

(54) **Präparat und Verfahren zum Vertreiben bzw. Fernhalten von Wild aus bzw. von Landschaftsabschnitten.**

(57) Zum Vertreiben bzw. Fernhalten von Wild aus bzw. von bestimmten Landschaftsabschnitten ist ein Präparat vorgesehen, das sich dadurch auszeichnet, dass eine Trägersubstanz mit Riechstoffen entsprechend der menschlichen Körperausdünstung versehen ist. Im Rahmen eines erfindungsgemässen Verfahrens werden vorzugsweise auf eine Trägersubstanz aufgebrachte, Wild vertreibende Riechstoffe in wildfrei zu machende Landschaftsabschnitte ausgebracht. Die Erfindung richtet sich schliesslich noch auf die Verwendung von der menschlichen Körperausdünstung entsprechenden Riechstoffen zum Vertreiben bzw. Fernhalten von Wild aus bzw. von bestimmten Landschaftsabschnitten.

Josef Egerer, Beim Biengarten 2b, 854o Schwabach
--------------------------------------------------------
Präparat und Verfahren zum Vertreiben bzw. Fernhalten von Wild aus bzw. von Landschaftsabschnitten
--------------------------------------------------------

Die Erfindung richtet sich auf ein Präparat und ein Verfahren zum Vertreiben bzw. Fernhalten von Wild aus bzw. von Landschaftsabschnitten.

Bei der Feldernte mit Erntemaschinen besteht ein wesentliches Problem darin, daß durch die relativ hohe erzielbare Arbeitsgeschwindigkeit im Feld sitzendes bzw. liegendes Wild, insbesondere Jungtiere, unbemerkt bleibt und deshalb von den Erntemaschinen verletzt oder getötet wird. Hierdurch entsteht jährlich ein ganz erheblicher Schaden am Wildbestand.Um dies zu vermeiden, wurde bisher vor allem auf akustischem Wege versucht die Tiere zu vertreiben. Hierzu wurden z. B. akustische Signalgeber an den Erntefahrzeugen angebracht, welche aber insofern keine befriedigende Wirkung entfalteten, als das Wild häufig den Warnton erst verhältnismäßig spät wahrnimmt und dann anstatt zu fliehen bewegungslos verharrt. Häufig versuchen auch Jäger und Jagdpächter das Wild am Vortag der Ernte aus den am nächsten Tag abzuerntenden Feldern durch Händeklatschen und Rufe zu vertreiben. Abgesehen davon, daß ein derartiges Vorgehen außerordentlich mühsam ist, muß der damit zu erzielende Erfolg als unbefriedigend angesehen werden, zumal sich bis zu dem Zeitpunkt, wo die Ernte dann tatsächlich stattfindet, zwischenzeitlich neues Wild in den Feldern niederlassen kann.

Ein weiterer in diese Richtung gehender Problemkreis besteht darin, daß Wild insbesondere nachts über Fernstraßen wechselt, wobei es zu Kollisionen zwischen Wild und Kraftfahrzeugen kommt. Hierbei entsteht ein volkswirtschaftlicher Verlust nicht nur durch die Tötung des Wildes sondern auch durch die Beschädigung der Kraftfahrzeuge, wobei nicht zuletzt auch in nicht unbeachtlichem Umfang Personenschäden zu beklagen sind. Zur Vermeidung derartiger Wildunfälle werden von den zuständigen Stellen erhebliche Aufwendungen für Zäune, Reflektoren an Bäumen und dgl. gemacht. Trotz dieser Bemühungen sind die Erfolge insgesamt noch als unzureichend zu bezeichnen bzw. der Aufwand ist außergewöhnlich hoch. Darüber hinaus sind Wildzäune auch von der ästhetischen Seite her nicht befriedigend und behindern den freien Durchgang für Menschen.

Hiervon ausgehend liegt der Erfindung die Aufgabe zugrunde, das Vertreiben bzw. Fernhalten von Wild aus bestimmten Landschaftsabschnitten, wie z. B. Feldern oder Straßenbereichen auf gleichermaßen zuverlässige, einfache und kostengünstige Weise zu erreichen.

Diese Aufgabe wird durch ein Präparat der eingangs genannten Art dadurch gelöst, daß eine Trägersubstanz mit Riechstoffen entsprechend der menschlichen Körperausdünstung versehen ist. Es entspricht der ständigen Erfahrung von Jägern und Wildpflegern und ist gleichermaßen auch wissenschaftlich untermauert, daß Wild die menschliche Ausdünstung über sehr große Entfernungen wittert und hiervon flüchtet bzw. solche Bereiche, in welchen eine entsprechende Witterung wahrnehmbar ist, von vornherein meidet. Von dieser Erfahrungstatsache ausgehend basiert der Grundgedanke der Erfindung auf der konsequenten und systematischen Ausnutzung dieses tierischen Verhaltens zur Lösung der eingangs geschilderten Probleme. Durch das Ausbringen eines erfindungsgemäßen Präparats in bestimmten Bereichen, z. B. auf abzuerntenden Feldern oder an Straßenrändern, wird das Wild dort vertrieben bzw. von diesen Bereichen abgehalten. Riechstoffe sind von Tieren selbst noch in Konzentrationen von $10^{-20}$ g/ml wahrnehmbar, so daß für eine wirksame Abschreckung lediglich sehr geringe Mengen des einzusetzenden Wirkstoffes ausreichen. Um dessen gleichmäßige Verteilung gleichwohl zu ermöglichen, wird er erfindungsgemäß auf eine Trägersubstanz aufgebracht.

In weiterer Ausgestaltung der Erfindung ist vorgesehen, daß die Trägersubstanz mit einem besonders witterungswirksamen Riechstoff aus der Mehrzahl der die menschliche Körperausdünstung bildenden Riechstoffe versehen ist. Da in der menschlichen Körperausdünstung auch nicht oder weniger witterungswirksame Riechstoffe enthalten sind, genügt es zur Erzielung der erfindungsgemäßen Wirkung, wenn ein besonders wirksamer Stoff isoliert verwendet wird.

Ein solcher besonders wirksamer Riechstoff kann vorteilhafterweise auch synthetisch hergestellt und auf eine Trägersubstanz aufgebracht werden. Insbeondere für die Verwendung in der Parfümerieindustrie ist es bereits gelungen, eine ganz erhebliche Zahl von Riechstoffen synthetisch darzustellen und deren geruchswirksame Molekülgruppen zu erkennen. Insbesondere bei der Riechwirkung
auf den Menschen hat man z. B. erkannt, daß funktionelle
Gruppen wie -OH, -OR, -CHO, -COR, -COOR, -CN, -NO$_2$ eine
angenehme Geruchsempfindung hervorrufen (Euosmophore),
während Gruppen wie -SH, -SR, -CHS, -CSR, -NC, -NH$_2$
eine unangenehme Geruchsempfindung auslösen (Kakosmophoren).
Ebenso lassen sich besonders witterungswirksame chemische Gruppen ermitteln und dementsprechende Riechstoffe
synthetisieren.

Nach einem weiteren Merkmal der Erfindung ist die Trägersubstanz pulverförmig konfektioniert. Auf diese Weise
kann die Ausbringung mit bekannten landwirtschaftlichen
Maschinen erfolgen, mit welchen z. B. auch pulverförmiger bzw. körniger Dünger ausgebracht wird. Unter Umständen kann das erfindungsgemäße Präparat z. B. ohnehin
auszubringendem Dünger oder Schädlingsbekämpfungsmitteln
od. dgl. beigefügt werden. Auch eine Ausbringung durch
Jäger oder Jagdpfleger ist bei dieser Konfektionierung
problemlos möglich.

Eine weitere denkbare Konfektionierung der Trägersubstanz
ist die Tablettenform. Hierdurch werden höhere Wirkstoffkonzentrationen an bestimmten Orten erzielt, so
daß bei dieser Konfektionierung ein Vorgehen so vorstellbar ist, daß die Tabletten um bzw. längs wildfrei
zu machender Landschaftsbereiche ausgelegt werden.

Schließlich kommt auch noch eine flüssige Trägersubstanz
in Betracht, welche den Vorteil mit sich bringt, daß
das erfindungsgemäße Präparat vom Rand von Feldern aus
über verhältnismäßig weite Strecken versprüht werden
kann.

Erfindungsgemäß können die dem Präparat beigegebenen Riechstoffe aus dem Perspiratio sensibiles (Sekret der Knäueldrüsen) gewonnen werden bzw. umfaßt das Präparat die darin enthaltenen Wirkstoffe. Insoweit ist zu berücksichtigen, daß die spezifische vom Menschen ausgehende Witterung, welche vom Wild mit größter Empfindlichkeit wahrgenommen wird, möglicherweise im Gegensatz zu von Tieren abgegebenen Körpergerüchen dadurch herausragt, daß die Schweißabgabe bei Menschen durch Drüsen erfolgt und sich so von der Wasserverdunstung bei den meisten Tieren unterscheidet, die auf der Oberhaut keine Drüsen aufweisen.

Vorteilhafterweise können als Riechstoff eine oder mehrere der Verbindungen Milchsäure, Harnstoff-N, Kreatinin und Harnsäure vorgesehen sein. Diese Stoffe stellen die wichtigsten geruchsbildenden Stoffe des menschlichen Schweißes dar, wobei die für den menschlichen Geruch typische Ausdunstung teilweise nicht auf diese Stoffe selbst, sondern auf deren Zersetzungsprodukte zurückzuführen ist.

Das erfindungsgemäße Präparat kann weiterhin in geringen Konzentrationen eine oder mehrere Aminosäuren umfassen, wobei insbesondere die Verwendung von Asparaginsäure vorgesehen sein kann. Nach wissenschaftlichen Untersuchungen entsteht der Geruch des etwas getrübten, an sich jedoch farblosen Schweißes durch die in ihm enthaltenen niedrigen Fettsäuren und durch deren Zersetzungsprodukte, ebenfalls Fettsäuren, die sich durch die bakterielle Umsetzung aus Milchsäure und aus Asparaginsäure sowie aus in Spuren enthaltenem Eiweiß bilden. Durch die Zufügung von Aminosäuren, insbesondere Asparaginsäure, wird also ein Zerfallsprozeß ermöglicht, wie er auch auf der menschlichen Hautoberfläche stattfindet. Anstelle von oder zusätzlich zu Asparaginsäure kommen als weitere Arminosäuren noch Glutaminsäure, Serin,Glyczin, Alanin, Citrulin, Arginin, Oxyprolin, Valin, Tyrosine und Leucine in Betracht.

Weiterhin kann vorgesehen sein, daß als Riechstoffe eine oder mehrere der Verbindungen Methansäure, Äthansäure, Propansäure und Butansäure oder höhere Fettsäuren herangezogen werden. Bei einem derartigen Aufbau des Präparats werden die Zerfallsprodukte unmittelbar verarbeitet, so daß ggf. eine besonders hohe Konzentration wirksamer Stoffe erzielt werden kann.

Eine besonders günstige Zusammensetzung kann dadurch erreicht werden, daß das Präparat zwei bis sechs Gramm eines 0,1 normalen gleichanteiligen Gemischs aus Ameisen-, Essig-, Propion- und Buttersäure gelöst in 100 1 Wasser umfaßt.

Schließlich kann noch vorgesehen sein,daß zur Herbeiführung einer Zersetzung der Grundstoffe das Präparat Capronsäure enthält.

Die Erfindung betrifft auch ein Verfahren zum Vertreiben bzw. Fernhalten von Wild aus bzw. von Landschaftsabschnitten, welches sich dadurch auszeichnet, daß vorzugsweise auf eine Trägersubstanz aufgebrachte, Wild vertreibende Riechstoffe in wildfrei zu machende Landschaftsabschnitte ausgebracht werden. Dabei werden vorzugsweise solche Riechstoffe entsprechend der menschlichen Körperausdünstung verwendet.

- 7 -

Insbesondere zum Vermeiden der Verletzung oder des Tötens von Wild bei der Felderntе ist im Rahmen des erfindungsgemäßen Verfahrens vorgesehen, daß die Riechstoffe vor Erntebeginn auf den Feldern ausgebracht werden.

Schließlich umfaßt die Erfindung noch die Verwendung von der menschlichen Körperausdünstung entsprechenden Riechstoffen zum Vertreiben bzw. Fernhalten von Wild aus bzw. von bestimmten Landschaftsabschnitten.

- 8 -

Patentansprüche:

1. Präparat zum Vertreiben bzw. Fernhalten von Wild aus bzw. von Landschaftsabschnitten, dadurch gekennzeichnet, daß eine Trägersubstanz mit Riechstoffen entsprechend der menschlichen Körperausdünstung versehen ist.

2. Präparat nach Patentanspruch 1, dadurch gekennzeichnet, daß die Trägersubstanz mit einem besonders witterungswirksamen Riechstoff aus der Mehrzahl der die menschliche Körperausdünstung bildenden Riechstoffe versehen ist.

3. Präparat nach Patentanspruch 1 oder 2, dadurch gekennzeichnet, daß der auf die Trägersubstanz aufgebrachte Riechstoff synthetisch hergestellt ist.

4. Präparat nach einem der Patentansprüche 1 bis 3, dadurch gekennzeichnet, daß die Trägersubstanz pulverförmig konfektioniert ist.

5. Präparat nach einem der Patentansprüche 1 bis 3, dadurch gekennzeichnet, daß die Trägersubstanz in Tablettenform konfektioniert ist.

6. Präparat nach einem der Patentansprüche 1 bis 3, dadurch gekennzeichnet, daß die Trägersubstanz flüssig konfektioniert ist.

7. Präparat nach einem der Patentansprüche 1 bis 6, dadurch gekennzeichnet, daß die Riechstoffe aus dem Perspiratio sensibiles (Sekret der Knäueldrüsen) gewonnen ist bzw. die darin enthaltenen Wirkstoffe umfaßt.

- 9 -

8. Präparat nach Patentanspruch 3, <u>dadurch gekennzeichnet,</u> daß es als Riechstoff einen oder mehrere der Verbindungen Milchsäure, Harnstoff-N, Kreatinin und Harnsäure enthält.

9. Präparat nach Patentanspruch 8, <u>dadurch gekennzeichnet,</u> daß es in geringen Konzentrationen einen oder mehrere Aminosäuren umfaßt.

10. Präparat nach Patentanspruch 8, <u>dadurch gekennzeichnet,</u> daß es Asparaginsäure umfaßt.

11. Präparat nach Patentanspruch 3, <u>dadurch gekennzeichnet,</u> daß es als Riechstoffe eine oder mehrere der Verbindungen Methansäure, Äthansäure, Propansäure und Butansäure oder höhere Fettsäuren enthält.

12. Präparat nach einem der Patentansprüche 6 bis 10, <u>dadurch gekennzeichnet,</u> daß es zwei bis sechs Gramm eines 0,1 normalen gleichanteiligen Gemischs aus Ameisen-, Essig-, Propion- und Buttersäure gelöst in 100 l Wasser umfaßt.

13. Präparat nach einem der Patentansprüche 6 bis 12, <u>dadurch gekennzeichnet,</u> daß es Capronsäure umfaßt.

14. Verfahren zum Vertreiben bzw. Fernhalten von Wild aus bzw. von Landschaftsabschnitten, <u>dadurch gekennzeichnet,</u> daß vorzugsweise auf eine Trägersubstanz aufgebrachte, Wild vertreibende Riechstoffe in wildfrei zu machende Landschaftsabschnitte ausgebracht werden.

15. Verfahren nach Patentanspruch 14, <u>dadurch gekennzeichnet,</u> daß die Riechstoffe der menschlichen Körperausdünstung entsprechen.

- 10 -

16. Verfahren nach Patentanspruch 14 oder 15, zum Vermeiden der Verletzung oder des Tötens von Wild bei der Feldernte, dadurch gekennzeichnet, daß die Riechstoffe vor Erntebeginn auf den Feldern ausgebracht werden.

17. Verwendung von der menschlichen Körperausdünstung entsprechenden Riechstoffen zum Vertreiben bzw. Fernhalten von Wild aus bzw. von bestimmten Landschaftsabschnitten.

**Europäisches Patentamt**

**EUROPÄISCHER RECHERCHENBERICHT**

Nummer der Anmeldung

EP 83 10 8665

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 125 225 (OPELIT GEORG VAN OPEL) <br> * Spalte 1, Zeilen 1-43; Spalte 3, Zeilen 5-11 * <br><br> --- | 1,2,14 ,15,17 | A 01 N 63/02 <br> A 01 N 47/28 <br> A 01 N 43/90 <br> A 01 N 43/50 <br> A 01 N 37/44 <br> A 01 N 37/36 <br> A 01 N 37/02 <br> A 01 M 29/00 |
| P,X | WO-A-8 300 417 (H. HANSEN u.a.) <br><br> * Seite 2, Zeilen 6-28; Seite 3, Zeile 5 - Seite 5, Zeile 6; Ansprüche 1,4,7 * <br><br> --- | 1-3,7, 14,15, 17 | |
| X | DE-C- 852 317 (H. HILDEBRANDT) <br><br> * Insgesamt * <br><br> --- | 1-7,11 ,13-15 ,17 | |
| Y | EP-A-0 033 117 (G. HUEBER u.a.) <br> * Seite 1, Zeile 16 - Seite 2, Zeile 4 * <br><br> --- | 1,2,7 | RECHERCHIERTE SACHGEBIETE (Int. Cl. ³) <br><br> A 01 M <br> A 01 N |
| Y | P. LEUTHARDT: "Lehrbuch der physiologischen Chemie", 15. Auflage, 1963, Seite 667, de Gruyter, Berlin, DE <br> * Seite 667, Zeilen 39-49 * <br><br> ---                    -/- | 7,8,11 ,13 | |

Der vorliegende Recherchenbericht wurde für alle Patentansprüche erstellt.

| Recherchenort | Abschlußdatum der Recherche | Prüfer |
|---|---|---|
| DEN HAAG | 19-12-1983 | FLETCHER A.S. |

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | EPERIENTIA, Band 24, Nr. 7, 15. Juli 1968, Seiten 641-752, Maryland, US W.A. SKINNER u.a.: "Human sweat components - Attractancy and repellency to mosquitoes" * Seite 679, rechte Spalte, Zeile 7 - Seite 680, linke Spalte, Zeile 8 * | 7,8 | |
| Y | --- MEDICAL & BIOLOGICAL ENGINEERING & COMPUTING, Band 16, Nr. 2, März 1978, Seiten 126-133, Stevenage, Herts., GB S.Y. SHAYA u.a.: "Percutaneous electrophoresis of amino acids and urea" * Seite 132, Tabelle 2 * | 7,9,10 | |
| A | --- DE-A-1 792 467 (PFAELZISCHE SPRIT- UND CHEMISCHE FABRIK) * Insgesamt * ----- | 1,3,6, 8,14, 15,17 | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 19-12-1983 | FLETCHER A.S. |